# EUROPÄISCHE PATENTANMELDUNG

(11) **EP 4 269 034 A1**
(43) Veröffentlichungstag der Anmeldung: **01.11.2023**
(21) Anmeldenummer: 22169745.1
(22) Anmeldetag: 25.04.2022
(51) Int. Cl.: B25F 5/02, F16J 15/16, F16J 15/40

(54) **DICHTGEOMETRIE MIT FÖRDERSTRUKTUR FÜR EINE MOBILE WERKZEUGMASCHINE**

(71) Anmelder: Hilti Aktiengesellschaft, 9494 Schaan (LI)
(72) Erfinder: Erhardt, Jochen, 86836 Klosterlechfeld (DE); Vaziri-Beiraghdar, Elham, 6832 Sulz (AT); Kondratiuk, Jens, 9470 Buchs (CH); Fünfer, Josef, 86343 Koenigsbrunn (DE); Plank, Uto, 85354 Freising (DE); Hummel, Daniel, 9470 Buchs (CH); Avci, Bircan, 86161 Augsburg (DE)
(74) Vertreter: Hilti Aktiengesellschaft Corporate Intellectual Property

(57) **Zusammenfassung**

Die Erfindung betrifft eine Dichtgeometrie (22) für eine mobile Werkzeugmaschine, beispielsweise eine Handwerkzeugmaschine (10), insbesondere zur Bearbeitung von natürlichen oder künstlichen, insbesondere zementhaltigen, Gesteinen, wobei die mobile Werkzeugmaschine eine Antriebseinheit (20) aufweist, wobei die Dichtgeometrie (22) eingerichtet ist, einen ein Schmiermittel (26) enthaltenden Innenbereich (IB) der Antriebseinheit (20) gegen einen Außenbereich (AB) außerhalb der Antriebseinheit (20) abzudichten. Sie ist dadurch gekennzeichnet, dass die Dichtgeometrie (22) eine Förderstruktur (28) aufweist, die eingerichtet ist, zumindest bei einem Betrieb der Antriebseinheit (20) das Schmiermittel (26) in einer Richtung vom Außenbereich (AB) zum Innenbereich (IB) zu fördern. Des Weiteren betrifft die Erfindung eine mobile Werkzeugmaschine. Eine mit einer solchen Dichtgeometrie (22) ausgestattete mobile Werkzeugmaschine weist eine besonders hohe Lebensdauer auf.

## Beschreibung

Die vorliegende Erfindung betrifft eine Dichtgeometrie für eine mobile Werkzeugmaschine, beispielsweise eine Handwerkzeugmaschine, insbesondere zur Bearbeitung von natürlichen oder künstlichen, insbesondere zementhaltigen, Gesteinen, wobei die mobile Werkzeugmaschine eine Antriebseinheit aufweist, wobei die Dichtgeometrie eingerichtet ist, einen ein Schmiermittel enthaltenden Innenbereich der Antriebseinheit gegen einen Außenbereich außerhalb der Antriebseinheit abzudichten. Die Erfindung betrifft des Weiteren eine mobile Werkzeugmaschine.

Relativ zueinander bewegte Teile von mobilen Werkzeugmaschinen, insbesondere von Handwerkzeugmaschinen, und insbesondere bewegte Teile der Antriebseinheit, unterliegen häufig einer starken Reibung. Die Reibung führt zu erheblichen Verlusten an Arbeitsleistung der Handwerkzeugmaschine. Auch kann es lokal oder über die gesamte Handwerkzeugmaschine hinweg zu beträchtlichen Temperaturerhöhungen kommen. Diese führen häufig wiederum zu einem beschleunigten Verschleiß. Auch stellen diese Temperaturerhöhungen ein Sicherheitsrisiko für einen Benutzer der Handwerkzeugmaschine dar. Zur Reduktion dieser Reibung befindet sich üblicherweise ein Schmiermittel in der Antriebseinheit. Eine Dichtgeometrie dient dann zur Abdichtung des Schmiermittel-aufweisenden Innenbereichs vom Außenbereich. Insbesondere bei leistungsstarken Handwerkzeugmaschinen ist die Dichtgeometrie einer starken mechanischen und thermischen Beanspruchung ausgesetzt. Damit einher gehen hohe Wartungsaufwände und vergleichsweise kurze Lebensdauern.

Wünschenswert und damit Aufgabe der vorliegenden Erfindung ist es daher, eine gattungsgemäße Dichtgeometrie sowie eine mobile Werkzeugmaschine vorzustellen, die besonders hohe Lebensdauern aufweisen.

Die Aufgabe wird gelöst durch eine Dichtgeometrie für eine mobile Werkzeugmaschine, insbesondere zur Bearbeitung von natürlichen oder künstlichen, insbesondere zementhaltigen, Gesteinen, wobei die mobile Werkzeugmaschine eine Antriebseinheit aufweist, wobei die Dichtgeometrie eingerichtet ist, einen ein Schmiermittel enthaltenden Innenbereich der Antriebseinheit gegen einen Außenbereich außerhalb der Antriebseinheit abzudichten, wobei die Dichtgeometrie eine Förderstruktur aufweist, die eingerichtet ist, zumindest bei einem Betrieb der Antriebseinheit das Schmiermittel in einer Richtung vom Außenbereich zum Innenbereich zu fördern.

Die mobile Werkzeugmaschine kann eine Handwerkzeugmaschine sein oder eine solche umfassen.

Die mobile Werkzeugmaschine kann auch ein Bauroboter, insbesondere eingerichtet für Arbeiten im Hoch- und/oder Tiefbau, sein oder einen solche umfassen.

Mit Hilfe der Förderstruktur kann die Antriebseinheit, zumindest wenn sie in Betrieb ist, berührungslos abgedichtet werden. Aus dem Innenbereich entweichendes Schmiermittel kann aktiv zurück in den Innenbereich transportiert werden.

Dabei kann unter einer berührungslosen Abdichtung eine Dichtung verstanden werden, die eingerichtet ist, zwischen zwei voneinander, in der Regel geringfügig, beabstandeten Elementen abzudichten, wobei die Dichtung zumindest bei Betrieb der Antriebseinheit von wenigstens einem der beiden Elemente beabstandet ist. Sie kann somit ausgebildet sein, dieses Element zumindest bei Betrieb der Antriebseinheit nicht zu berühren.

Der Erfindung liegt dabei der Gedanke zugrunde, dass eine berührungslose Dichtung bei Betrieb der Antriebseinheit keiner oder zumindest keiner merkbaren Reibung unterliegt. Mechanische und damit einhergehend thermische Belastungen der Dichtgeometrie lassen sich somit reduzieren. Somit lässt sich die Lebensdauer der Dichtgeometrie erheblich verlängern. Auch lässt sich der für die Dichtgeometrie erforderliche Wartungsaufwand erheblich reduzieren oder sogar gänzlich vermeiden. Auch Temperaturen an und/oder in einer mobilen Werkzeugmaschine, in der die Dichtgeometrie verwendet wird, lassen sich reduzieren.

Schmiermittelkühlungsvorrichtungen können kleiner dimensioniert werden oder ganz entfallen. Auch lassen sich die Arbeitsleistung und/oder, beispielsweise bei Akku-betriebenen Geräten, die Nutzungsdauer der mobilen Werkzeugmaschine aufgrund der reduzierten Reibung steigern bzw. verlängern.

Die Dichtgeometrie kann zur Abdichtung einer in einer ersten Drehrichtung rotierenden Welle der Antriebseinheit eingerichtet sein. Beispielsweise kann dann die Förderstruktur durch die rotierende Welle antreibbar und / oder angetrieben sein.

Sie kann auch eingerichtet sein, die Welle abzudichten, wenn die Welle in einer zweiten, von der ersten Drehrichtung verschiedenen Drehrichtung rotiert. Mit anderen Worten kann die Dichtgeometrie eingerichtet sein, unabhängig von der Drehrichtung der Welle abzudichten.

Die Dichtgeometrie kann eine Dichtlippe aufweisen, die bei Stillstand der Antriebseinheit zur Abdichtung des Innenbereichs vom Außenbereich an einer Gegenfläche der mobilen Werkzeugmaschine, insbesondere der Antriebseinheit, anliegt. Somit lässt sich eine dauerhafte Abdichtung bei Stillstand der Antriebseinheit sicherstellen.

Die oder eine Dichtlippe der Dichtgeometrie kann ausgebildet sein, dass sich bei Betrieb der Antriebseinheit diese Dichtlippe von der oder einer Gegenfläche ablöst oder dass sich bei Betrieb der Antriebseinheit eine Anpresskraft dieser Dichtlippe auf diese Gegenfläche zumindest im Vergleich zum Stillstand der Antriebseinheit verringert. Die Dichtgeometrie kann eingerichtet sein, dass sich die Ablösung beziehungsweise die Verringerung der Anpresskraft erst ab einem vordefinierten, insbesondere unteren, Grenzwert, beispielsweise einer Mindestdrehgeschwindigkeit einer Welle der mobilen Werkzeugmaschine, ergibt. Die Dichtgeometrie kann insbesondere eingerichtet sein, dass die Ablösung beziehungsweise die Verringerung der Anpresskraft durch eine durch den Betrieb der Antriebseinheit entwickelte Zentripetalkraft entsteht.

Die Dichtlippe kann zur Innenseite und / oder zur Außenseite hin ausgebildet und / oder angeordnet sein. Insbesondere bei zu erwartenden hohen Schmutzbelastungen, beispielsweise durch Staub, wie sie häufig bei Handwerkzeugmaschinen wie Kombihämmern, Meißelhämmern oder dergleichen zu erwarten sind, kann eine Dichtgeometrie mit wenigstens je einer außenseitigen und einer innenseitigen Dichtlippe besonders vorteilhaft sein.

Um Überlastungen oder gar Beschädigungen der wenigstens einen Dichtlippe, insbesondere bei hohen Geschwindigkeiten bzw. Drehzahlen der Welle, zu vermeiden, kann die Dichtlippe in ihrer Verformbarkeit beschränkt sein.

Dazu kann die Dichtgeometrie ein Begrenzungselement aufweisen, das eingerichtet ist, zumindest bei Betrieb der Antriebseinheit eine maximale Auslenkung und / oder Verformung der Dichtlippe zu begrenzen. Das Begrenzungselement kann dazu beispielsweise einen die Dichtlippe zumindest teilweise umschließenden Käfig bilden.

Denkbar ist, dass die Förderstruktur Förderschaufeln zur Förderung des Schmiermittels, beispielsweise nach Art eines Propellers und / oder nach Art einer Schaufelradpumpe aufweist.

Hohe Förderleistungen und damit eine besonders gute Dichtleistung, lassen sich erreichen, wenn die Förderstruktur ein Gewinde aufweist. Je nach Geometrie und / oder Anzahl der Windungen lässt sich die dann Förderleistung durch Anpassung des Gewindes, gut anpassen.

Um insbesondere ein frühes Zusetzen von Gewindegängen des Gewindes zu verhindern, kann das Gewinde eine Gewindetiefe von mehr als dem Dreifachen, und insbesondere höchstens das Fünffache, einer Spalthöhe zwischen dem Gewinde und einem an dieses angrenzenden Gehäuse aufweisen.

Bei einer Klasse von Ausführungsformen kann vorgesehen sein, dass die Förderstruktur einen Kegelstumpf-förmigen Förderkörper aufweist. Zur Förderung oder zur Verbesserung der Förderung können Fliehkraft-Effekte genutzt werden.

Die Dichtgeometrie kann ein Dichtungsgehäuse aufweisen.

Das Dichtungsgehäuse kann ebenfalls konisch zusammenlaufend angeordnet und / oder ausgebildet sein. Somit kann das Dichtgehäuse den Förderkörper eng umschließen, so dass sich nur geringe Spalthöhen ergeben.

Die Förderstruktur kann ein oder mehrere Förderrippen aufweisen, durch die bei Betrieb der Antriebseinheit (20) Schmiermittel (26) geleitet und / oder gefördert wird. Die wenigstens eine Förderrippe kann insbesondere auf dem Förderkörper angeordnet und / oder ausgebildet sein.

Die wenigstens eine Förderrippe kann sich vom Außenbereich zum Innenbereich hin verjüngen. Dadurch kann Schmiermittel sowohl bei Rotation der Welle in der ersten als auch in der zweiten Drehrichtung gefördert werden; mithin kann die Förderung unabhängig von der Drehrichtung erfolgen.

Die Dichtgeometrie kann eingerichtet sein, mit einem wasserhaltigen Schmiermittel verwendet zu werden. Dazu kann sie insbesondere auf durch den hohen Wassergehalt entstehende Anforderungen und Eigenschaften abgestimmt, beispielsweise Wasser- und/oder Wasserdampfbeständig, ausgebildet sein. Die Dichtgeometrie kann beispielsweise aus einem nichtrostenden Material ausgebildet sein und / oder wenigstens einen Bereich einer Oberfläche aufweisen, der mit einer Antioxidationsschutzschicht versehen ist.

Die Dichtgeometrie kann einen Dichtungsträger aufweisen, an und/oder in dem die Dichtlippe angeordnet ist. Die Dichtlippe kann in einer Einbuchtung des Dichtungsträgers sitzen. Dann kann die Dichtlippe aus einem anderen Material ausgebildet sein als der Dichtungsträger. Beispielsweise kann die Dichtlippe aus einem Thermoplasten ausgebildet sein. Der Dichtungsträger kann aus einem Elastomer ausgebildet sein. Denkbar ist auch, die Dichtlippe aus einem Elastomer auszubilden. Der Dichtungsträger kann auch aus einem Thermoplasten ausgebildet sein.

Die Dichtlippe kann einen V-förmigen oder einen zumindest im Wesentlichen V-förmigen Querschnitt aufweisen. Sie kann insbesondere einen Dichtlippenflügel aufweisen. Der Dichtlippenflügel kann einen Arm des V-förmigen oder im Wesentlichen V-förmigen Querschnitts bilden. Durch die V-Form kann die Dichtlippe, insbesondere, wenn sie aus einem elastischen Material ausgebildet ist, eine geringe Federhärte aufweisen.

Die Dichtgeometrie kann eingerichtet sein, bei Betrieb der Antriebseinheit im Schmiermittel wenigstens eine Wirbelströmung zu erzeugen, durch die die Dichtwirkung der Dichtgeometrie verbessert wird. Insbesondere kann die Wirbelströmung eine Sogwirkung erzeugen, sodass Schmiermittel nur in reduziertem Umfang überhaupt bis zur Dichtlippe gelangen kann. Durch die Wirbelströmung kann somit eine zusätzliche Dichtwirkung, insbesondere durch weitere Erhöhung des Strömungswiderstands entlang der Austrittsrichtung erzielt werden. Beispielsweise, wenn die Dichtgeometrie einen Bereich zweier zylinderartiger oder zumindest im Wesentlichen zylinderartiger Teile umfasst, bei denen vorzugsweise eines der Teile in dem anderen Teil angeordnet ist, lassen sich derartige Wirbelströmungen beispielsweise durch Taylour-Couette Strömungen erzeugen.

Dazu kann der Dichtungsträger der Dichtgeometrie alternativ oder ergänzend wenigstens eine Wirbelstruktur zur Erzeugung der wenigstens einen Wirbelströmung aufweisen. Die Wirbelstruktur kann an einem Oberflächenabschnitt des Dichtungsträgers ausgebildet sein. Sie kann im Querschnitt ellipsenbogenförmig, insbesondere kreisbogenförmig, ausgebildet sein.

Denkbar ist auch, dass die Dichtgeometrie eingerichtet ist, zumindest bei Betrieb der Antriebseinheit ein Sperrfluid, insbesondere Sperrluft, aufzuweisen und/oder zu erzeugen. Das Sperrfluid, insbesondere die Sperrluft, kann dazu ein das Schmiermittel sperrendes Luftpolster bilden.

Die Dichtgeometrie kann auch ferromagnetisch dichtend ausgebildet sein.

Die Dichtgeometrie kann eine Schmiermittel-Labyrinthdichtung aufweisen. Diese kann der Dichtlippe entlang eines Strömungspfads des Schmiermittels vorgelagert ausgebildet sein. Die Dichtgeometrie kann eine Engstelle aufweisen. Die Engstelle kann langgestreckt sein. Die Dichtgeometrie kann wenigstens ein Strömungshindernis aufweisen. Allgemein kann die Dichtgeometrie zur Erhöhung eines Strömungswiderstandes des Schmiermittels entlang einer Austrittsrichtung vom Innenbereich zum Außenbereich ausgebildet sein. Sie kann beispielsweise ein Tesla-Ventil oder zumindest eine Tesla-Ventil-artige Struktur aufweisen. Sie kann insbesondere ausgebildet sein, dass das Schmiermittel zumindest bei Betrieb der Antriebseinheit einen Gegendruck gegen weiteres, entlang der Austrittsrichtung anströmendes Schmiermittel aufbaut.

Denkbar ist auch, dass im Bereich der Schmiermittel-Labyrinthdichtung, insbesondere im Bereich der Engstelle, die Förderstruktur ausgebildet ist.

Bei einer besonders kostengünstigen Ausführung der mobilen Werkzeugmaschine kann die Dichtgeometrie, insbesondere die wenigstens eine Dichtlippe, ein Acryl-Nitril-Butadien (im Folgenden: NBR) aufweisen. Das NBR kann ein hydriertes NBR oder ein anderweitig modifiziertes NBR sein. Somit kann die Dichtgeometrie beständig gegen Wasser, Heißwasser und/oder Wasserdampf sein.

Zumindest die Förderstruktur, insbesondere das Gewinde, kann aus einem Metall, einer Metalllegierung, einem Kunststoff und / oder einer Keramik ausgebildet sein. Beispielsweise kann sie gesintert sein. Sie kann aus einem nichtrostenden Material ausgebildet sein. Alternativ oder ergänzend kann sie, zumindest bereichsweise, eine Schutzbeschichtung, insbesondere eine Antioxidations-Schutzbeschichtung, aufweisen.

Auch kann die Dichtgeometrie ein fluorhaltiges Material aufweisen. Insbesondere kann sie einen fluorhaltigen Kautschuk aufweisen. Die Dichtgeometrie kann aus einem besonders temperaturbeständigen Elastomer gebildet sein. Der fluorhaltige Kautschuk kann besonders bevorzugt ein Fluorkautschuk (im Folgenden: FKM) sein. Denkbar ist alternativ oder ergänzend auch, dass der fluorhaltige Kautschuk ein Perfluorkautschuk (FFKM) ist oder einen solchen aufweist. Allgemein kann es sich bei dem fluorhaltigen Kautschuk um ein fluoriertes Elastomer handeln. Denkbar ist auch, dass das fluorhaltige Material ein Polytetrafluorethylen (PTFE) ist. Die Dichtgeometrie kann auch unterschiedliche fluorhaltige Materialien, insbesondere unterschiedliche fluorhaltige Kautschuke und/oder ein PTFE, aufweisen.

Die Dichtgeometrie ist besonders flexibel einsetzbar, insbesondere auch in Verbindung mit einem wasserhaltigen Schmiermittel verwendbar, wenn die Dichtgeometrie ein wasserdampfbeständiges Material aufweist. Vorzugsweise kann die Dichtgeometrie aus wenigstens einem wasserdampfbeständigen Material ausgebildet sein.

Der Einstufung eines Materials als wasserdampfbeständig, heißwasserbeständig und / oder wasserdampfbeständig kann eine Prüfungsdurchführung nach Maßgabe der ISO 1817 zugrunde gelegt sein. Vorzugsweise kann sich die Einstufung auf eine Testung bei 60°C und / oder, insbesondere zur Testung der Wasserdampfbeständigkeit, bei 100°C, beziehen. Die Dauer der zugrunde gelegten Testung kann wenigstens 72 Stunden, besonders bevorzugt 168 Stunden und / oder 1008 Stunden, betragen. Ganz besonders ist eine zweifache Testung über 168 Stunden und über 1008 Stunden bevorzugt. Als Einstufungsmerkmal kann eine Änderung einer Zugfestigkeit und / oder einer Reißdehnung herangezogen sein. Insbesondere kann ein besonders taugliches Material bei einer Testung über 168 Stunden bei 60°C eine Verringerung der Zugfestigkeit um höchstens 14%, besonders bevorzugt um höchstens 10% und ganz besonders bevorzugt um höchstens 8%, aufweisen.

Die Verwendungsmöglichkeiten der erfindungsgemäßen Dichtgeometrie lassen sich auch dadurch erweitern, wenn die Dichtgeometrie ein hochtemperaturbeständiges Material aufweist. Vorzugsweise kann die Dichtgeometrie aus einem hochtemperaturbeständigen Material ausgebildet sein. Insbesondere kann die Dichtgeometrie ein Material aufweisen, das dauerhaft Temperaturen von mindestens 120° C, besonders bevorzugt von mindestens 150° C, widersteht. Die Dichtgeometrie kann insbesondere aus einem Material ausgebildet sein, das gegen Wasserdampf mit Temperaturen von mindestens 120°C, besonders bevorzugt von mindestens 150°C, beständig ist. Denkbar ist insbesondere, dass die Dichtgeometrie einen derart wasserdampfbeständigen und hochtemperaturbeständigen fluorhaltigen Kautschuk aufweist.

Alternativ oder ergänzend lassen sich der Wartungsaufwand weiter verringern und/oder die Lebensdauer der Dichtgeometrie steigern, wenn die Dichtgeometrie, insbesondere die Dichtlippe, eine Beschichtung aufweist. Die Beschichtung kann eine Plasmabeschichtung sein. Sie kann glasartig oder diamantartig sein. Allgemein kann sie eine gegenüber dem übrigen Material der Dichtgeometrie erhöhte Mohs-Härte aufweisen.

Verschleiß, insbesondere der wenigstens einen Dichtlippe, kann auch verringert werden, indem die wenigstens eine Dichtlippe ausgebildet ist, eine möglichst geringe Anpresskraft zu entwickeln. Weist die Dichtgeometrie beispielsweise einen Radialwellenwellendichtring auf, kann der Radialwellenwellendichtring eingerichtet sein, lediglich eine verhältnismäßig geringe Radialanpresskraft zu erzeugen. Die erzeugte Radialanpresskraft kann durch eine umfangsbezogene Radialanpresskraft quantifiziert sein. Vorzugsweise kann die umfangsbezogene Radialanpresskraft höchstens 200 N/m, besonders bevorzugt höchstens 160 N/m, betragen. Durch eine derart geringe Radialanpresskraft wird eine reibungsbedingte Temperaturerhöhung in der Dichtlippe reduziert oder vermieden. Selbst bei einem vergleichsweise hohen Wassergehaltes des Schmiermittels kann dadurch eine Bildung von Wasserdampf im Bereich der Dichtlippe vermieden oder zumindest reduziert werden. Das Material der Dichtgeometrie kann somit einer vergleichsweise geringen Beanspruchung ausgesetzt sein. Dieser Vorteil kann besonders bedeutsam sein, wenn die Dichtgeometrie einen fluorhaltigen Kautschuk, insbesondere ein FKM, aufweist.

Zur Reduktion oder Vermeidung des Eintritts von Störstoffen in die Antriebseinheit kann eine Störstoff-Labyrinthdichtung an oder in der Antriebseinheit angeordnet sein. Vorzugsweise kann die Störstoff-Labyrinthdichtung im Außenbereich angeordnet sein und/oder an den Außenbereich angrenzen.

In den Rahmen der Erfindung fällt des Weiteren **eine mobile Werkzeugmaschine,** beispielsweise eine Handwerkzeugmaschine, insbesondere zur Bearbeitung von natürlichen oder künstlichen, insbesondere zementhaltigen, Gesteinen, wobei die mobile Werkzeugmaschine eine Antriebseinheit und eine Dichtgeometrie aufweist, wobei die Dichtgeometrie eingerichtet ist, einen ein Schmiermittel enthaltenden Innenbereich der Antriebseinheit gegen einen Außenbereich außerhalb der Antriebseinheit abzudichten, wobei die mobile Werkzeugmaschine, insbesondere die Antriebseinheit, eine erfindungsgemäße Dichtgeometrie aufweist.

Die mobile Werkzeugmaschine, in der die Dichtgeometrie verwendet wird, kann als elektrische Handwerkzeugmaschine ausgebildet sein. Sie kann auch als Bauroboter, insbesondere eingerichtet für Arbeiten im Hoch- und/oder Tiefbau, eingerichtet sein.

Die als Bauroboter ausgebildete oder einen solchen umfassende mobile Werkzeugmaschine kann wenigstens eine Komponente aus der Gruppe enthaltend eine mobile Plattform, beispielsweise eine Räder- oder Ketten-basierte mobile Plattform und / oder eine unbemannte, flugfähige Plattform, eine Hubvorrichtung zur vertikalen Verlagerung eines Roboterarms und / oder eines Manipulators, einen Roboterarm, einen Manipulator und eine elektrische Werkzeugmaschine, insbesondere zur Aufnahme im Manipulator, aufweisen.

Sie kann als Bohrmaschine, Meißelhammer, Bohrhammermaschine, als Direktsetzgerät oder dergleichen ausgebildet und/oder einsetzbar sein. Die mobile Werkzeugmaschine kann ein Hochleistungsgerät, insbesondere mit einer aufgenommenen Leistung von mindestens 1 kW, besonders bevorzugt von mindestens 2 kW sein.

Durch die erzielte Reibungsminderung lässt sich somit im Vergleich zu bisherigen mobilen Werkzeugmaschinen derselben Leistungsklasse, insbesondere im Bereich der maximal entnehmbaren Leistung der Stromquelle, eine bemerkenswerte Steigerung der Arbeitsleistung der mobilen Werkzeugmaschine erzielen.

Die Antriebseinheit kann wenigstens ein Getriebe aufweisen. Das Schmiermittel kann eingerichtet sein, zumindest einen Teil der Antriebseinheit, insbesondere das Getriebe oder zumindest einen Teil des Getriebes, zu schmieren.

Besonders bevorzugt kann die mobile Werkzeugmaschine kabellos betreibbar sein. Bei kabellosen mobilen Werkzeugmaschinen ist üblicherweise die zur Verfügung stehende Gesamtenergie begrenzt. Die Arbeitsleistungen von kabellosen mobilen Werkzeugmaschinen sind zudem oftmals im Vergleich zu kabelgebundenen Geräten reduziert. Durch die erfindungsgemäß erzielte Reibungsminderung lassen sich Nutzungsdauern verlängern. Auch können die vormals reduzierten Arbeitsleistungen gesteigert werden und beispielsweise auf das Niveau kabelgebundener Geräte gehoben werden, wobei gleichzeitig die flexible Anwendbarkeit kabelloser mobiler Werkzeugmaschinen erhalten bleiben kann.

Die mobile Werkzeugmaschine kann dazu einen wiederaufladbaren Stromspeicher aufweisen. Beispielsweise kann sie einen Akkumulator, insbesondere einen lithiumbasierten Akkumulator, aufweisen. Denkbar ist alternativ oder ergänzend auch, dass die mobile Werkzeugmaschine eine Brennstoffzelle aufweist.

Die mobile Werkzeugmaschine kann bevorzugt eingerichtet sein, ein diamanthaltiges Werkzeug anzutreiben. Das diamanthaltige Werkzeug kann beispielsweise eine Diamantbohrkrone, ein Diamantsägeblatt oder dergleichen sein.

Die Dichtgeometrie kann zur Abdichtung eines Grenzbereichs zwischen einem Gehäuse der mobilen Werkzeugmaschine und einer durch die Antriebseinheit angetriebenen Welle, beispielsweise einer Welle einer Werkzeugaufnahme der mobilen Werkzeugmaschine, ausgebildet sein.

Alternativ oder ergänzend können der Wartungsaufwand der mobilen Werkzeugmaschine, insbesondere ihrer Dichtgeometrie, reduziert und/oder deren Lebensdauer weiter verlängert werden, wenn die mobile Werkzeugmaschine ausgebildet ist, dass die Temperatur der Dichtgeometrie im Betrieb der Antriebseinheit unter 120°C, vorzugsweise unter 100°C, bleibt. Dazu kann die mobile Werkzeugmaschine eine Kühlvorrichtung aufweisen.

Weist die Dichtgeometrie eine dynamische Dichtung auf oder ist sie als solche ausgebildet, das heißt, ist sie eingerichtet, an einem relativ zu ihr bewegten Teil, beispielsweise der Welle, abzudichten, kann die Dichtgeometrie, insbesondere ausschließlich, an wenigstens ein verhältnismäßig langsam relativ zu ihr bewegtes Teil angrenzen. Eine Drehzahl des wenigstens einen relativ zur Dichtgeometrie bewegten Teils kann weniger als 10⁴ Umdrehungen pro Minute, insbesondere weniger als 8 x 10³ Umdrehungen pro Minute, betragen. Die Drehzahl kann höchstens zwei Fünftel, bevorzugt höchstens ein Drittel, der Drehzahl einer bislang üblichen gattungsgemäßen mobilen Werkzeugmaschine, beispielsweise einer mobilen Werkzeugmaschine mit 22 x 10³ Umdrehungen pro Minute, betragen. Denkbar ist dazu beispielsweise, die Antriebseinheit von einem Gehäuse zu umschließen. Aus dem Gehäuse kann lediglich eine Welle, beispielsweise zum Antrieb einer Werkzeugaufnahme der mobilen Werkzeugmaschine, austreten. Eine derartige Welle befindet sich üblicherweise auf einer Abtriebsseite der Antriebseinheit und weist damit üblicherweise verhältnismäßig niedrige Drehzahlen auf.

Das Schmiermittel kann ein wasserhaltiges Schmiermittel sein. Es kann die im Zusammenhang mit der Dichtgeometrie vorangehend beschriebenen Merkmale aufweisen.

Das wasserhaltige Schmiermittel kann wenigstens 5 Prozent, vorzugsweise wenigstens 15 Prozent, Wasser aufweisen. Bei besonders bevorzugten Ausführungsformen der Erfindung weist das Schmiermittel einen Wassergehalt zwischen 25 und 40 Prozent, insbesondere von 28 oder von 38 Prozent, auf. Wasser kann den Hauptbestandteil des Schmiermittels bilden. Das wasserhaltige Schmiermittel kann bei einer üblichen Betriebstemperatur der mobilen Werkzeugmaschine fluid, insbesondere flüssig sein. Der Wassergehalt des Schmiermittels kann höchstens 70 Prozent betragen. Das Schmiermittel kann neben Wasser wenigstens ein Additiv, insbesondere ein Verschleißschutzadditiv, ein Korrosionsschutzadditiv und/oder ein antimikrobielles, wachstumshemmendes Additiv, enthalten. Das Schmiermittel kann auch wenigstens ein Glycol enthalten. Das Glycol oder die Glycole können, insbesondere nach Wasser, einen zweitgrößten Anteil am Schmiermittel haben.

Unter der Angabe eines Prozentanteils kann bevorzugt ein auf das Gewicht bezogener Prozentanteil, also ein Gewichtsprozentanteil, verstanden werden.

Die mobile Werkzeugmaschine kann wenigstens eine Dichtgeometrie nach Art der vorangehend und / oder nachfolgend beschriebenen Dichtgeometrien aufweisen.

In den Rahmen der Erfindung fällt des Weiteren **eine Verwendung einer erfindungsgemäßen mobilen Werkzeugmaschine** zur Bearbeitung eines natürlichen oder künstlichen Gesteins, vorzugsweise zum Abriss und/oder zur Errichtung eines Gebäudes. Bei einer solchen Verwendung der erfindungsgemäßen mobilen Werkzeugmaschine sind häufig besonders hohe Arbeitsleistungen erforderlich, sodass der Nutzen der Erfindung bei dieser Verwendung besonders ausgeprägt zum Tragen kommen kann.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

### Es zeigen:

- **Fig. 1**: eine Handwerkzeugmaschine;
- **Fig. 2**: eine erste Dichtgeometrie mit einem Kegelstumpf-förmigen Förderkörper;
- Fig. 2a: einen Ausschnitt II aus Fig. 2 in vergrößerter Darstellung;
- **Fig. 3**: den Kegelstumpf-förmigen Förderkörper der ersten Dichtgeometrie;
- **Fig. 4**: einen alternativen Kegelstumpf-förmigen Förderkörper;
- **Fig. 5**: eine zweite Dichtgeometrie mit einem ein Gewinde aufweisenden Förderkörper; und
- **Fig. 6**: eine Förderstruktur der zweiten Dichtgeometrie.

In der nachfolgenden Beschreibung der Figuren werden zur Erleichterung des Verständnisses der Erfindung für gleiche oder sich funktional entsprechende Elemente jeweils die gleichen Bezugszeichen verwendet.

Wenngleich die Erfindung allgemein mobile Werkzeugmaschinen und somit beispielsweise Bauroboter oder Handwerkzeugmaschinen umfasst, wird allein zur Erleichterung des Verständnisses die Erfindung am Beispiel einer Handwerkzeugmaschine erläutert.

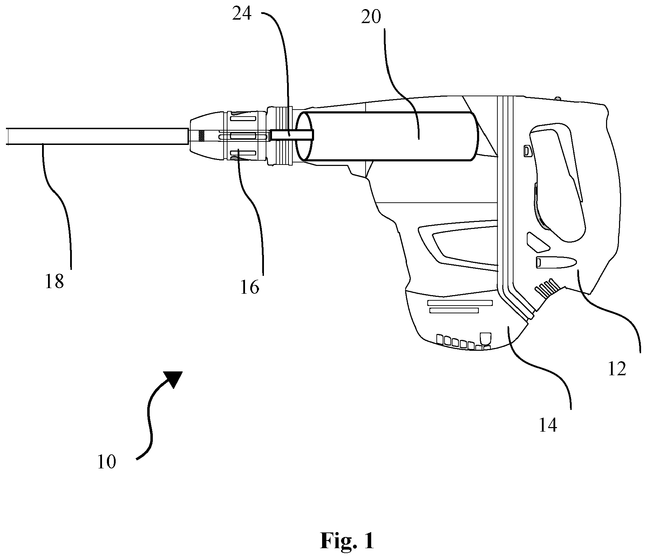

**Fig. 1** zeigt eine Handwerkzeugmaschine **10.** Die Handwerkzeugmaschine 10 ist als Bohrhammer ausgebildet. Sie ist kabellos betreibbar. Dazu weist sie im Bereich eines Gehäuses **12** einen wiederaufladbaren Akkumulator **14** auf. Der Akkumulator 14 weist Lithium auf. Die Handwerkzeugmaschine 10 ist als tragbares Gerät ausgebildet. Sie weist vorzugsweise ein Gewicht zwischen 0,5 und 15 kg und allgemein von weniger als 25 kg auf.

Die Handwerkzeugmaschine 10 weist ferner eine Werkzeugaufnahme **16** auf. In der Werkzeugaufnahme 16 ist ein Werkzeug **18** aufgenommen. Das Werkzeug 18 weist eine Diamantbohrkrone auf.

In schematisierter Darstellung ist ferner eine Antriebseinheit **20** der Handwerkzeugmaschine 10 in Fig. 1 erkennbar. Die Antriebseinheit 20 befindet sich innerhalb des Gehäuses 12 und ist nur aus Darstellungsgründen dem Gehäuse 12 überlagert dargestellt.

Die Antriebseinheit 20 treibt eine Welle **21** an, an die wiederum die Werkzeugaufnahme 16 gekoppelt ist.

Die Antriebseinheit 20 weist ein elektropneumatisches Schlagwerk und einen Drehantrieb auf, die die Welle 21 schlagend und / oder drehend antreiben. Das Schlagwerk und der Drehantrieb sind über ein Getriebe der Antriebseinheit 20 mit einem Elektromotor der Antriebseinheit 20 mechanisch verbunden und durch diesen antreibbar.

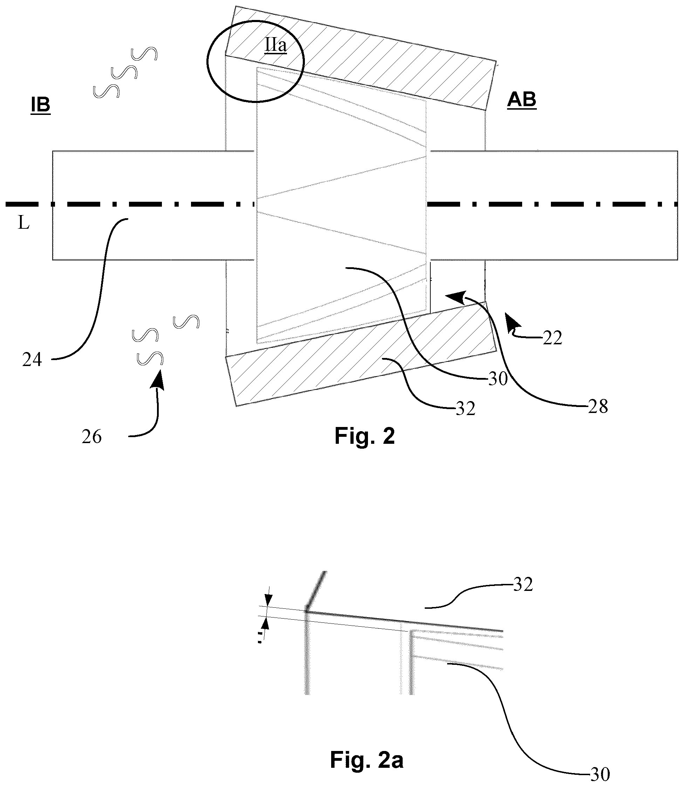

**Fig. 2** zeigt eine erste Dichtgeometrie 22 in einer schematischen, teilgeschnittenen Seitenansicht. Die Dichtgeometrie 22 ist Teil der Antriebseinheit 20 (siehe Fig. 1).

Die Dichtgeometrie **22** ist eingerichtet, zwischen einer von der Antriebseinheit 20 angetriebenen Welle **24** und dem Gehäuse 12 (siehe Fig. 1) abzudichten.

Insbesondere dichtet die Dichtgeometrie 22 einen ein Schmiermittel **26** enthaltenden Innenbereich **IB** der Antriebseinheit 20 gegen einen Außenbereich **AB** außerhalb der Antriebseinheit 20 ab. In Fig. 2 ist das Schmiermittel 26 in Form mehrerer Wellenlinien schematisch angedeutet. Das Schmiermittel 26 kann dabei grundsätzlich den gesamten freien und zusammenhängenden Raum innerhalb des Innenbereichs IB erreichen beziehungsweise sich innerhalb dieses Raumes ausbreiten.

Das Schmiermittel 26 ist ein wasserhaltiges Schmiermittel. Es weist 33 Gewichtsprozent Wasser auf. Somit weist die Handwerkzeugmaschine 10 (Fig. 1) die Antriebseinheit 20 auf, wobei die Antriebseinheit 20 das wasserhaltige Schmiermittel 26 aufweist.

Die Dichtgeometrie 22 eingerichtet und dadurch besonders geeignet, zur Abdichtung des wasserhaltigen Schmiermittels 26 verwendet zu werden. Dazu sind ihre Einzelteile jeweils aus nichtrostenden und / oder aus korrosionsgeschützten Materialien ausgebildet.

Die Dichtgeometrie 22 ist radial um die Welle 24 umlaufend ausgebildet.

Die Dichtgeometrie 22 weist eine Förderstruktur 28 auf. Die Förderstruktur 28 ist eingerichtet, bei einem Betrieb der Antriebseinheit 20, insbesondere wenn die Welle 24 um ihre eigene Längsachse L rotiert, das Schmiermittel 26 in einer Richtung vom Außenbereich AB zum Innenbereich IB zu fördern.

Dazu weist die Förderstruktur **28** einen Förderkörper 30 auf. Der Förderkörper 30 ist Kegelstumpf-förmig ausgebildet. Er ist an der Welle 24 festgelegt, sodass er mit der Rotation der Welle 24 mitrotiert. Der Förderkörper **30** ist von einem Dichtungsgehäuse **32** umgeben. Das Dichtungsgehäuse **32** weist ebenfalls eine Kegelstumpf-artige Form auf. Zur Aufnahme des Förderkörpers 30 ist es innen hohl ausgebildet.

**Fig. 2a** zeigt vergrößert einen Ausschnitt II aus Fig. 2. Zu erkennen ist, dass zwischen dem Förderkörper 30 und dem Dichtgehäuse 32 ein Spalt mit Spalthöhe **b** besteht.

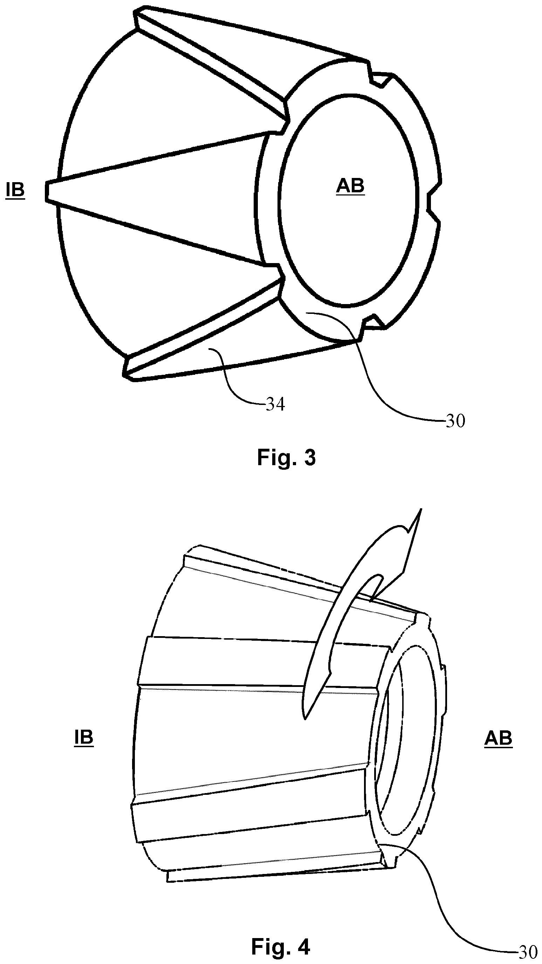

**Fig. 3** zeigt in einer perspektivischen Darstellung den Förderkörper 30 der Dichtgeometrie 22 gemäß Fig. 2.

Der Förderkörper 30 weist auf seiner Mantelfläche mehrere Förderrippen **34** auf. Sie sind im Wesentlichen dreieckig geformt. Insbesondere verjüngen sie sich von der Deckfläche zur Grundfläche des Förderkörpers 30 und damit entsprechend der Einbausituation gemäß Fig. 2 vom Außenbereich AB zum Innenbereich IB hin.

Durch die unterschiedlichen Durchmesser der Deckfläche und der Grundfläche des Kegelstumpf-förmig Förderkörpers 30 wächst bei Rotation der Welle 24 (Fig. 2) und damit bei Rotation des Förderkörpers 30 die Umfangsgeschwindigkeit entlang der Mantelfläche des Förderkörpers 30 von dem Außenbereich AB zum Innenbereich IB an. Etwaiges, sich im Bereich der Mantelfläche befindliches Schmiermittel 26 (Fig. 2) wird somit zum Innenbereich IB hin gefördert.

Durch die Förderrippen 34 kann die Förderwirkung und damit die resultierende Dichtwirkung weiter gesteigert werden. Insbesondere leiten sie bei Betrieb der Antriebseinheit, insbesondere bei Rotation der Welle 24, Schmiermittel 26 zum Innenbereich IB hin. Die sich verjüngenden, insbesondere sich symmetrisch verjüngenden, Formen der Förderrippen 34 ermöglichen eine drehrichtungsunabhängige Förderung von Schmiermittel 26 zum Innenbereich IB hin.

Eine alternative Ausführungsform eines Förderkörpers 30 zeigt **Fig. 4** in einer perspektivischen Darstellung.

Diese Ausführungsform entspricht, soweit nicht anders genannt, der vorangehenden Ausführungsform gemäß Fig. 3. Im Unterschied zu dieser verjüngen sich die Förderrippen 34 nicht vom Außenbereich AB zum Innenbereich IB hin. Vielmehr sind die Förderrippen 34 dieses Ausführungsbeispiels rechteckig oder zumindest im Wesentlichen rechteckig ausgebildet. Ihre Hauptrichtung verläuft schräg zur Zentralachse der Förderkörpers 30. Unter anderem je nach Anzahl und Ausrichtung dieser Förderrippen 34 kann dieser Förderkörper 30 höhere Förderleistungen als die Ausführungsform gemäß Fig. 2 bzw. Fig. 3. erzielen. Für eine optimale Förderung ist eine Rotation des Förderkörpers 30 in der mit einem Pfeil in Fig. 4 angedeuteten Drehrichtung, also rechtsdrehend um eine vom Außenbereich AB zum Innenbereich IB hin verlaufende Zentralachse des Förderkörpers 30, bevorzugt.

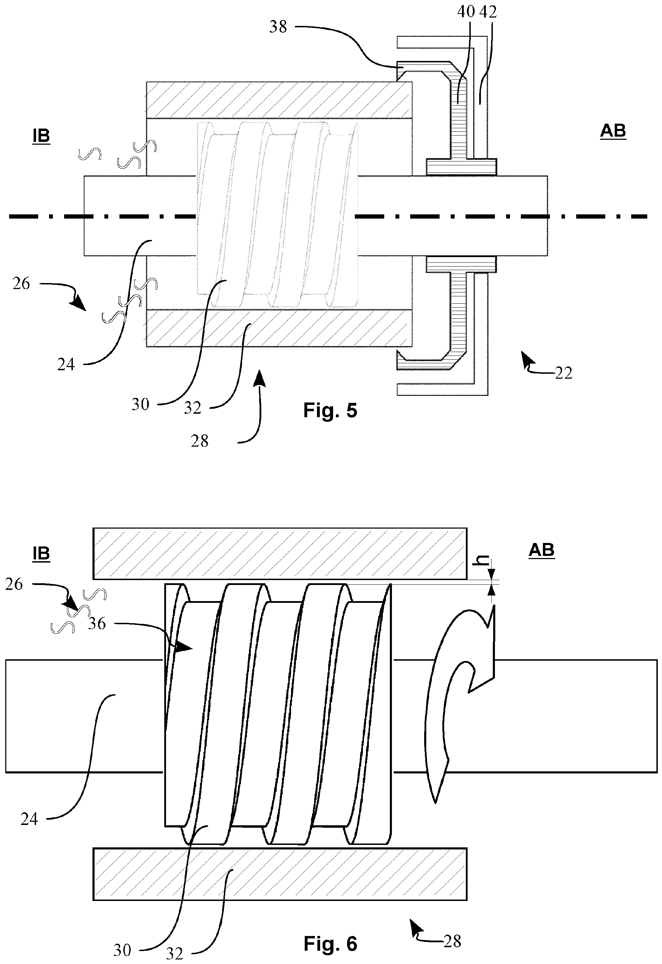

**Fig. 5** zeigt eine weitere Dichtgeometrie 22 in einer schematischen, teilgeschnittenen Seitenansicht.

Diese Dichtgeometrie 22 entspricht, soweit nicht anders genannt, den vorangehend beschriebenen Dichtgeometrien gemäß Fig. 2 bis Fig. 4.

Sie unterscheidet sich insbesondere darin, dass ihre Förderstruktur 28 einen ein Gewinde aufweisenden Förderkörper 30 und ein zu diesem kongruent ausgebildetes Dichtungsgehäuse 32 aufweist.

Auch bei dieser Ausführungsform kann sich Schmiermittel 26 über den ganzen Innenbereich IB hinweg ausbreiten, wird aber bei Erreichen des Förderkörpers 30 durch diesen zum Innenbereich IB zurücktransportiert.

Dazu zeigt **Fig. 6** die Förderstruktur 28 in vergrößerter Darstellung in einer schematischen, teilgeschnittenen Seitenansicht.

Auf der Welle 24 sitzt wiederum der Förderkörper 30. Auch bei dieser Ausführungsform umgibt ein Dichtgehäuse 32 den Förderkörper 30.

Der Förderkörper 30 weist ein Gewinde **36,** insbesondere ein Außengewinde, auf. Das Gewinde ist ein Flachgewinde. Der Förderkörper 30 sowie das Dichtgehäuse 32 können zylindrisch oder Kegelstumpf-förmig ausgebildet sein.

Das Gewinde 36 ist eingerichtet, bei Betrieb der Antriebseinheit (20), insbesondere bei Rotation der Welle 24, Schmiermittel (26) zu fördern, insbesondere zum Innenbereich IB zurückzutransportieren.

Insbesondere bei Arbeiten auf Baustellen ist mit starker Staubbildung, Abrieb und ähnlichen Partikel-Belastungen zu rechnen.

Um ein Zusetzen von Gewindegängen zu vermeiden, weist das Gewinde 36 eine Gewindetiefe von etwa dem Vierfachen der Spalthöhe h zwischen dem Gewinde 36 und dem an dieses angrenzenden Dichtungsgehäuse 32 auf.

Auch bei dieser Ausführungsform gibt es eine hinsichtlich der Förderwirkung und damit der Dichtwirkung bevorzugte Drehrichtung; im Beispiel gemäß Fig. 6 wiederum in der mit einem Pfeil angedeuteten Drehrichtung, also rechtsdrehend um eine vom Außenbereich AB zum Innenbereich IB hin verlaufende Zentralachse des Förderkörpers 30.

Beispielhaft zeigt Fig. 5 zudem eine Dichtlippe 38. Die Dichtlippe 38 ist eingerichtet, bei Stillstand der Antriebseinheit 20 zur Abdichtung des Innenbereichs IB vom Außenbereich AB an einer Gegenfläche der mobilen Werkzeugmaschine, im Ausführungsbeispiel gemäß Fig. 5 am Dichtungsgehäuse 32, anzuliegen.

Bei Betrieb der Antriebseinheit 20, insbesondere wenn die Welle 24 rotiert, löst sich die Dichtlippe 38 von der Gegenfläche, hier dem Dichtungsgehäuse 32, ab und / oder - bei geringen Drehzahlen - es verringert sich zumindest die Anpresskraft der Dichtlippe 38 auf das Dichtungsgehäuse 32 im Vergleich zum Stillstand der Antriebseinheit 20.

Die Dichtgeometrie 22 weist einen Dichtungsträger **40** auf. Der Dichtungsträger 40 kann aus NBR ausgebildet sein. Der Dichtungsträger 40 ist presssitzend an der Welle 24 fixiert. Alternativ oder ergänzend kann der Dichtungsträger 28 an der Welle 24 anvulkanisiert und/oder angeklebt sein. Die Dichtlippe 38 ist am Dichtungsträger 40 ausgebildet.

Die Dichtlippe 38 weist einen V-förmigen Querschnitt auf. Sie ragt radial zur Zentralachse der Welle 24 bzw. des Förderkörpers 30 zum Dichtungsgehäuse 32 hin.

Die Dichtlippe 38 ist aus einem Elastomer ausgebildet. Bei einem Ausführungsbeispiel der Erfindung ist dazu die Dichtlippe 38 aus NBR ausgebildet. Bei einem alternativen Ausführungsbeispiel ist die Dichtlippe 38 aus einem fluorhaltige Kautschuk, insbesondere aus einem FKM, ausgebildet. Die Dichtlippe 38 kann eine Plasmabeschichtung, insbesondere zur Minderung der Reibung am Dichtungsgehäuse 32, aufweisen.

Bei Stillstand der Antriebseinheit 20 liegt das freie Ende der Dichtlippe 38 am Dichtungsgehäuse 32 seitlich an. Insbesondere presst die Dichtlippe 38 mit einer, vorzugsweise geringen, Anpresskraft gegen das Dichtungsgehäuse 32. Somit dichtet die Dichtung 38 bei Stillstand der Antriebseinheit 20 den Innenbereich IB, der unter anderem durch das Dichtungsgehäuse 32 und über den Führungskörper 30 und den Dichtungsträger 40 vom Außenbereich AB abgegrenzt ist, gegen den Außenbereich AB ab. Das im Innenbereich IB befindliche Schmiermittel 26 kann nicht in den Außenbereich AB austreten.

Bei Betrieb der Antriebseinheit 20 und damit bei Rotation der Welle 24 wird die Dichtlippe 38 fliehkraft-bedingt radial von der Welle 24 weg gerichtet verformt. Dadurch verringert sich die Anpresskraft der Dichtlippe 38, mit der diese gegen das Dichtungsgehäuse 32 presst. Überschreitet die Drehzahl der Welle 24 eine Mindestdrehgeschwindigkeit, so hebt die Dichtlippe 32 zumindest geringfügig ab.

Die Reibung zwischen dem Dichtlippenflügel 34 und dem Dichtungsgehäuse 32 und damit die sonst lokal entstehende relative Temperaturerhöhung werden dadurch abgeschwächt oder vermieden. Eine lokale Bildung von Wasserdampf im Bereich der Dichtlippe 38 kann somit ebenfalls im Umfang verringert oder sogar gänzlich vermieden werden. Auch dies ermöglicht eine Verwendung des überwiegend wasserhaltigen Schmiermittels 26.

Die Fliehkraft-bedingte Auslenkung der Dichtlippe 38 wird durch ein Begrenzungselement **42** auf eine maximale Auslenkung begrenzt. Somit kann sich die Dichtlippe 38 nur entsprechend der Begrenzung durch das Begrenzungselement 42 verformen. Überlastungen oder gar Schädigungen, insbesondere bei hohen Drehzahlen der Welle 24, können vermieden werden.

Die Anordnung aus Dichtlippe 38, insbesondere in Verbindung mit dem Dichtungsträger 40 und / oder dem Begrenzungselement 42, ist vergleichsweise unempfindlich gegenüber Fertigungstoleranzen, beispielsweise des Dichtungsgehäuses 32 oder des Dichtungsträgers 40.

Denkbar ist alternativ auch, dass, beispielsweise wenn das Gewinde anstatt als Außengewinde als Innengewinde des, dann vorzugsweise innen zumindest im Wesentlichen hohlen, Förderkörpers 30 ausgebildet ist, die Dichtungslippe 38 bei Stillstand an der Welle 24 anliegt und bei höheren Drehzahlen von dieser abhebt.

Die Anordnung einer Dichtlippe 38, insbesondere in Verbindung mit dem Dichtungsträger 40 und / oder dem Begrenzungselement 42, ist anhand der Ausführungsform gemäß Fig. 5 erläutert worden. Gleichermaßen ist es denkbar, die Dichtlippe 38, insbesondere in Verbindung mit dem Dichtungsträger 40 und / oder dem Begrenzungselement 42, in analoger Weise bei den anderen bislang vorgestellten Ausführungsformen der Dichtgeometrie 22 vorzusehen. Dies ist auch für diese anderen Ausführungsformen bevorzugt, um auch bei diesen anderen Ausführungsformen eine Dichtigkeit bei Stillstand zusätzlich abzusichern.

Weitere Ausführungsformen ergeben sich, wenn in analoger Weise die Dichtlippe 38, insbesondere in Verbindung mit dem Dichtungsträger 40 und / oder dem Begrenzungselement 42, nicht wie beispielhaft in Fig. 5 dargestellt im Bereich des Außenbereich AB, sondern im Bereich des Innenbereichs IB angeordnet ist.

Denkbar, insbesondere wenn hohe Partikel-Belastungen zu erwarten sind, sowohl im Bereich des Innenbereichs IB als auch im Bereich des Außenbereichs AB jeweils wenigstens eine Dichtlippe 38, insbesondere in Verbindung mit dem Dichtungsträger 40 und / oder dem Begrenzungselement 42, vorzusehen.

Die Dichtgeometrie 22, insbesondere gemäß den Ausgestaltungen gemäß der vorangehend beschriebenen Ausführungsbeispiele, ermöglicht somit eine Abdichtung und damit Verwendbarkeit von besonders niedrigviskosen Schmiermitteln, insbesondere wasserhaltigen Schmiermitteln. Durch Minimierung lokaler Reibflächen können geringe Verlustleistungen sowie geringe thermische Belastungen des wasserhaltigen Schmiermittels erzielt werden, sodass selbst bei längerer unterbrechungsfreier Nutzung keine oder lediglich geringe Mengen an Schmiermittel bis zum oder über den Dampfpunkt hinaus erhitzen. Verdampfendes Wasser kann zudem aufgrund der geringen Verlustleistungen an relativ kühl bleibenden Wänden der Dichtgeometrie 22 wieder kondensieren und damit dem Schmiermittelkreislauf erhalten bleiben.

## Patentansprüche

1. **Dichtgeometrie (22)** für eine mobile Werkzeugmaschine, beispielsweise eine Handwerkzeugmaschine (10), insbesondere zur Bearbeitung von natürlichen oder künstlichen, insbesondere zementhaltigen, Gesteinen, wobei die mobile Werkzeugmaschine eine Antriebseinheit (20) aufweist, wobei die Dichtgeometrie (22) eingerichtet ist, einen ein Schmiermittel (26) enthaltenden Innenbereich (IB) der Antriebseinheit (20) gegen einen Außenbereich (AB) außerhalb der Antriebseinheit (20) abzudichten,
**dadurch gekennzeichnet,**
**dass** die Dichtgeometrie (22) eine Förderstruktur (28) aufweist, die eingerichtet ist, zumindest bei einem Betrieb der Antriebseinheit (20) das Schmiermittel (26) in einer Richtung vom Außenbereich (AB) zum Innenbereich (IB) zu fördern.

2. Dichtgeometrie nach dem vorhergehenden Anspruch, **dadurch gekennzeichnet, dass** die Dichtgeometrie (22) zur Abdichtung einer in einer ersten Drehrichtung rotierenden Welle (24) der Antriebseinheit (20) eingerichtet ist.

3. Dichtgeometrie nach dem vorhergehenden Anspruch, **dadurch gekennzeichnet, dass** die Dichtgeometrie (22) auch eingerichtet ist, die Welle (24) abzudichten, wenn die Welle (24) in einer zweiten, von der ersten Drehrichtung verschiedenen Drehrichtung rotiert.

4. Dichtgeometrie nach einem der vorhergehenden Ansprüche, **dadurch gekennzeichnet, dass** die Dichtgeometrie (22) eine Dichtlippe (38) aufweist, die bei Stillstand der Antriebseinheit (20) zur Abdichtung des Innenbereichs (IB) vom Außenbereich (AB) an einer Gegenfläche der mobilen Werkzeugmaschine anliegt.

5. Dichtgeometrie nach einem der vorhergehenden Ansprüche, **dadurch gekennzeichnet, dass** die oder eine Dichtlippe (38) der Dichtgeometrie (22) ausgebildet ist, dass sich bei Betrieb der Antriebseinheit (20) diese Dichtlippe (38) von der oder einer Gegenfläche der mobilen Werkzeugmaschine ablöst oder dass sich bei Betrieb der Antriebseinheit (20) eine Anpresskraft dieser Dichtlippe (38) auf diese Gegenfläche zumindest im Vergleich zum Stillstand der Antriebseinheit (20) verringert.

6. Dichtgeometrie nach einem der vorhergehenden Ansprüche, **dadurch gekennzeichnet, dass** die Dichtgeometrie (22) ein Begrenzungselement (42) aufweist, das eingerichtet ist, zumindest bei Betrieb der Antriebseinheit (20) eine maximale Auslenkung und / oder Verformung der Dichtlippe (38) zu begrenzen.

7. Dichtgeometrie nach einem der vorhergehenden Ansprüche, **dadurch gekennzeichnet, dass** die Förderstruktur (28) ein Gewinde (36(') aufweist, durch das bei Betrieb der Antriebseinheit (20) Schmiermittel (26) geleitet und / oder gefördert wird.

8. Dichtgeometrie nach dem vorhergehenden Anspruch, **dadurch gekennzeichnet, dass** das Gewinde (36) eine Gewindetiefe von mehr als dem Dreifachen, und insbesondere höchstens das Fünffache, der Spalthöhe (h) zwischen dem Gewinde (36) und einem an dieses angrenzenden Gehäuse, insbesondere einem Dichtungsgehäuse (32), aufweist.

9. Dichtgeometrie nach einem der vorhergehenden Ansprüche, **dadurch gekennzeichnet, dass** die Förderstruktur (28) einen Kegelstumpf-förmigen Förderkörper (30) aufweist.

10. Dichtgeometrie nach einem der vorhergehenden Ansprüche, **dadurch gekennzeichnet, dass** die Förderstruktur (28) wenigstens eine Förderrippe (34) aufweist, durch die bei Betrieb der Antriebseinheit (20) Schmiermittel (26) geleitet und / oder gefördert wird.

11. Dichtgeometrie nach dem vorhergehenden Anspruch, **dadurch gekennzeichnet, dass** sich die wenigstens eine Förderrippe (34) vom Außenbereich (AB) zum Innenbereich (IB) hin verjüngt.

12. Dichtgeometrie nach einem der vorhergehenden Ansprüche, **dadurch gekennzeichnet, dass** die Dichtgeometrie (22) ein wasserdampfbeständiges Material aufweist.

13. Dichtgeometrie nach einem der vorhergehenden Ansprüche, **dadurch gekennzeichnet, dass** die Dichtgeometrie (22) ein hochtemperaturbeständiges Material aufweist.

14. **Mobile Werkzeugmaschine,** beispielsweise Handwerkzeugmaschine (10), insbesondere zur Bearbeitung von natürlichen oder künstlichen, insbesondere zementhaltigen, Gesteinen, wobei die mobile Werkzeugmaschine eine Antriebseinheit (20) und eine Dichtgeometrie (22) aufweist, wobei die Dichtgeometrie (22) eingerichtet ist, einen ein Schmiermittel (26) enthaltenden Innenbereich (IB) der Antriebseinheit (20) gegen einen Außenbereich (AB) außerhalb der Antriebseinheit (20) abzudichten,
**dadurch gekennzeichnet,**
**dass** die mobile Werkzeugmaschine, insbesondere die Antriebseinheit (20), eine Dichtgeometrie (22) nach einem der vorhergehenden Ansprüche aufweist.

15. Mobile Werkzeugmaschine nach dem vorhergehenden Anspruch, **dadurch gekennzeichnet, dass** das Schmiermittel (26) ein, insbesondere überwiegend, wasserhaltiges Schmiermittel ist.
